# EUROPÄISCHE PATENTSCHRIFT

(11) **EP 3 224 599 B1**
(45) Veröffentlichungstag und Bekanntmachung des Hinweises auf die Patenterteilung: **23.01.2019**
(21) Anmeldenummer: 15800776.5
(22) Anmeldetag: 24.11.2015
(51) Int. Cl.: G01N 21/33, G01N 21/3563, G01N 21/359, G01N 21/84

(54) **PROZESS MONITORING FÜR UV AUSHÄRTUNG**
PROCESS MONITORING FOR UV CURING
MONITORING D'UN PROCESSUS DE DURCISSEMENT PAR UV

(30) Priorität: 25.11.2014 US 201462084004 P
(43) Veröffentlichungstag der Anmeldung: 04.10.2017
(73) Patentinhaber: Oerlikon Surface Solutions AG, Pfäffikon, 8808 Pfäffikon (CH)
(72) Erfinder: ZUEGER, Othmar, 9495 Triesen (LI)
(86) Internationale Anmeldenummer: PCT/EP2015/077445
(87) Internationale Veröffentlichungsnummer: WO 2016/083342

(56) Entgegenhaltungen:
- EP-A1- 0 927 726
- EP-A2- 2 664 910
- DE-A1-102010 061 767
- US-A1- 2005 143 483
- US-A1- 2006 044 555

## Beschreibung

Die Erfindung bezieht sich auf eine in-situ Prozessmonitoringeinrichtung für UV sensitive Lacke auf Bauteilen.

Bei der Aushärtung von UV sensitiven Lackfilmen auf Bauteilen muss eine Lack spezifische UV Dosis als Produkt der auf die Fläche des Lacks fallenden UV Licht Intensität und der Zeit der Bestrahlung überschritten werden, so dass eine vollständige Reaktion (Polymerisation) des viskose flüssigen Lackfilms zu einem festen Oberflächenbeschichtung erfolgt. Bei unvollständiger Aushärtung werden geforderte mechanischen Eigenschaften des Lackbeschichtung wie Härte und Kratzfestigkeit nicht erreicht, ebenso kann die Haftfestigkeit oder andere Eigenschaften wegen unvollständiger Polymerisierung nicht oder nur unvollständig erreicht werden. In einer industriellen Anwendung solcher Lackbeschichtungen auf Bauteilen ist eine Prüfung dieser Eigenschaften aus Kosten- und Produktionsablaufgründen nur an einzelnen Stichproben möglich. Bei Feststellung von ungenügender Aushärtung muss davon ausgegangen werden, dass zumindest eine beträchtliche Anzahl Bauteile, die seit dem Zeitpunkt der letzten Prüfung produziert wurden, qualitative Mängel haben können und daher als Ausschuss verloren gehen.

Aus diesem Grunde ist es sehr wünschenswert in der industriellen Anwendung, eine im Produktionsablauf integrierte Prüf- oder Monitoring Einrichtung und Methode zu haben, mit der Eigenschaften des mit UV belichtenden Films als Oberflächenschicht gemessen werden können, um so die Qualität der Bauteile ohne Verzögerung sicherzustellen. Noch wünschenswerter für diese Monitoring Einrichtung und Methode ist die Möglichkeit, den kontinuierlichen Aushärtungsprozess des Lackfilms während der UV Belichtung anhand von Messsignalen verfolgen zu können. Mit einem solchen Monitoring kann der Aushärteprozess gesteuert werden, im einfachsten Fall kann so die Aushärtezeit gesteuert angepasst werden. Damit kann diese geregelt so kurz wie nötig für vollständige Aushärtung gehalten werden. Auf diese Weise kann die höchstmögliche Produktivität bei gleichbleibender Qualität für den Aushärteschritt erreicht werden. Im Fall einer Belichtung mit fixer Aushärtezeit muss aus Prozesssicherheitsgründen länger als minimal notwendig gehalten, um bei Variationen im Prozess sicher in jedem Falle vollständige Aushärtung zu erhalten. In einer weiterführenden Version eines Monitoring des Aushärtezustands kann auch auf andere Prozessparameter regeltechnisch Einfluss genommen werden, so könnte z.B. die Leistung der UV Lichtquelle oder die Geschwindigkeit, mit der die Bauteile durch den UV Belichtungsbereich bewegt werden, dynamisch angepasst werden. Auf diese Weise kann minimale Prozesszeit für vollständige Aushärtung erreicht werden, womit die Produktivität maximiert wird.

Mit einem solchen Prozess Monitoring können gewöhnlich nicht direkt die zu erreichenden, meist mechanische Eigenschaften des ausgehärteten Lackfilms gemessen werden, da sie vornehmlich kontaktlos erfolgen sollten. Mit solchen Methoden können nur verwandte Eigenschaften gemessen, über die mit grosser Sicherheit auf das Einhalten der notwendigen Eigenschaften geschlossen werden kann. Eine verbreitete Methode zur Bestimmung des Aushärtungsgrads ist die optische Spektroskopie, bei der die Veränderung von Reflektion (oder Transmission) des auf den Lackfilm einfallenden Licht mit Hilfe von spektral auflösenden Messeinrichtungen analysiert wird. Diese spektralen Änderungen sind Lack spezifisch in unterschiedlichen Wellenlängenbereichen. Beispiele für den UV Bereich sind in einer Broschüre der Fa. Microchemicals GmbH, Ulm, Deutschland (http://www.microchemicals.com/technical_information/exposure_photoresist.pdf) beschrieben, bzw. für den Infrarotbereich von B. L. Gründen in der Dissertation "Cure characterization of an unsaturated polyester resin using near-infrared, fluorescence and UV/visible reflection spectroscopies", (Dissertation/Thesis 9924301, The University of Connecticut, 1999) zu finden.

US 2006/044555 A1 offenbart eine insitu Prozessmonitoringvorrichtung bei der Strahlungsquelle und Signalquelle identisch sind. Die Anwendung sowie der optische Strahlengang ist jedoch eine andere als die vorliegende.

US 2005/143483 offenbart ebenfalls eine insitu Prozessmonitoringvorrichtung bei der Strahlungsquelle und Signalquelle identisch sind und es kommen dichroitische Spiegel zum Einsatz. Die Strahlenführung bleibt aber auch hier unbefriedigend.

DE 10 2010 061767 A1 offenbart die Verwendung eines Lochspiegels. Dadurch gelangt zwar Licht zum Sensor der Monitoringvorrichtung. Allerdings geht auch Licht durch das Loch verlohren.

Geeignete Messeinrichtungen sind üblicherweise Gitterspektrometer oder Fourier Transform Spektrometer wie in "On-line monitoring of the acrylate conversion in UV photopolymerization by near-infrared reflection spectroscopy" von Scherzer, Mehnert und Lucht (Polymer Spectroscopy Volume 205, pp.151-162, 2004) beschrieben, oder Lichtsensoren in Kombination mit angepassten optischen Filterelementen. Bei der Aushärtung des Lackfilms verändern sich die Spektren in gewissen Bereichen. Diese Veränderungen werden als quantitatives Mass für den Aushärtungsgrad herangezogen.

Ein solches Prozess Monitoring kann eine stichprobenhafte Qualitätssicherung nicht vollständig ersetzen. Durch Vergleich der spektroskopischen Eigenschaften mit den technisch relevanten Lackeigenschaften aus Stichproben kann aber abgeglichen werden und so können die spektroskopischen Daten für eine kontinuierliche Überwachung der Qualität des Lackfilms verwendet werden, was in einer erweiterten Form wie oben erwähnt für die Steuerung des Prozesses dienen kann.

Die Eigenschaften der Oberflächenbeschichtungen auf Bauteilen erfolgt stichprobenartig, ausserhalb des Produktionsprozesses, sowohl mit direkten Methoden der Prüfung mechanischer Eigenschaften, die die Beschichtung gewöhnlich zerstören, oder auch zerstörungsfreien Methoden, die andere Eigenschaften messen, die aus Erfahrung im direkten Zusammenhang mit den notwendigen Eigenschaften stehen.

Bei den zerstörungsfreien Methoden sind insbesondere optische Methoden bekannt, wie in einer Broschüre der Fa. Microchemicals GmbH, Ulm, Deutschland (http://www.microchemicals.com/technical_information/exposure_photoresist.pdf) ausführlich beschrieben. Beim Aushärten von UV Lackfilmen erfolgt eine Polymerisationsreaktion, bei der aus den Monomeren/Oligomeren im viskos-flüssigen Lack Polymerketten entstehen, wobei durch die strukturelle Veränderung auch eine Veränderung der optische Eigenschaften des Lackfilms stattfindet. Bei der durch UV induzierten Aushärtung wird ein Teil des UV Lichts Wellenlängen abhängig absorbiert. Dieses Absorptionsverhalten verändert sich mit dem Aushärtungsgrad und kann als Veränderung des wellenlängenabhängigen Reflektionsverhaltens (Reflektionsspektrum) mit Hilfe von Spektrometern erfasst werden. Beispiele für den UV Bereich sind in einer Broschüre der Fa. Microchemicals GmbH, Ulm, Deutschland (http://www.microchemicals.com/technical_information/exposure_photoresist.pdf) beschrieben, bzw. für den Infrarotbereich von B. L. Gründen in der Dissertation "Cure characterization of an unsaturated polyester resin using near-infrared, fluorescence and UV/visible reflection spectroscopies", (Dissertation/Thesis 9924301, The University of Connecticut, 1999) zu finden. UV Spektrometer mit Zeilendetektoren sind dafür besonders geeignet, da mit diesen Reflektionsspektren des gesamten UV Wellenlängenbereichs von 230...400nm innerhalb von bis zu weniger als 10 Millisekunden gemessen werden können.

Spektrometer mit gleichem Aufbau, aber Array Detektoren für den Nah-Infrarotbereich von 800...1700nm (NIR), sind heute verfügbar und können mit ähnlichen Ausleseraten betrieben werden. Damit können Änderungen des spektralen Reflektionsverhaltens im NIR Bereich während des Aushärtungsvorgangs mit UV Belichtung simultan verfolgt werden wie in "On-line monitoring of the acrylate conversion in UV photopolymerization by near-infrared reflection spectroscopy" von Scherzer, Mehnert und Lucht (Polymer Spectroscopy Volume 205, pp.151-162, 2004) beschrieben.

Im Infrarot Bereich IR (1500...20'000nm) verändern sich Anregungsbanden mit der Umwandlung des viskosen Lacks in die ausgehärteten Beschichtung, die sich als AeÄnderung im Infrarot Reflektonsspektrum zeigen. In einem bestimmten Wellenzahlband erfolgt eine gut messbare Veränderung, mit der der Aushärtungszustand des Lackfilms bestimmt werden kann. Siehe Lowry und Weesner (Using Real-Time FT-IR to Characterize UV Curable Optical Adhesives, Spektroskopy, Vol. 26, Iss. 8, pp.40-46, 2011). Infrarot Spektren werden heute fast ausschliesslich mit Fourier-Transform-Infrarot Spektrometern (FTIR) gemessen.

Für spezifische Anwendungen können spektrale Änderungen in der Reflektion auch mit Hilfe von einem oder mehreren geeigneter optischer Filtern und einfachen optischen Intensitätssensoren erfasst werden, die Filter müssen aber spezifisch auf die Anwendung und die spektralen Eigenschaften der Lichtreflektion vom Lackfilm angepasst sein. Für eine industrielle Anwendung kann diese einfache, jedoch nur spezifisch einsetzbare Lösung als günstigere und robustere Lösung anstelle eines Breitband Spektrometers durchaus Sinn machen.

Aus dem Stand der Technik ergeben sich insbesondere folgende Nachteile:
Ohne Monitoring Einrichtung ist nur ein verzögertes Erkennen von Qualitätsproblemen erst durch Stichprobenmessungen an produzierten Teilen möglich.

Weiters ist eine verlängerte Belichtungszeit zum sicheren Erreichen der notwendigen Belichtungsdosis erforderlich.

Überdies besteht die Gefahr einer Überbelichtung des Lackfilms, was zu einer Versprödung führen kann.

Bislang existiert keine oder nur verzögerte Früherkennung von Prozessdrifts, die bis zu gravierenden Qualitätsproblemen führen können.

Die Erfindung betrifft eine in-situ Prozessmonitoringvorrichtung für die Messung des Aushärtungszustands eines UV aushärtbaren Lacks gemäß Anspruch 1.

Die Erfindung wird im Folgenden im Detail und anhand von Figuren beispielhaft ergänzt.
Fig.1: Schematische Darstellung der nicht erfindungsgemäßen automatisierten Erfassung eines Aushärtezustandes eines UV-aushärtbaren Lackfilms auf Bauteilen.
Fig.2: Schematische Darstellung einer nicht erfindungsgemäßen Synchronisation für bewegte Bauteile zur automatisierten Erfassung eines Aushärtezustandes eines UV-aushärtbaren Lackfilms, in dem ein Sensor die Position des Bauteils erfasst und ein Trigger Signal 209 die einzelnen Spektralaufnahmen für eine Serie von vordefinierten, aufeinanderfolgenden Positionen generiert.
Fig.3. Schematische Darstellung der nicht erfindungsgemäßen automatisierten Erfassung eines Aushärtezustandes eines UV-aushärtbaren Lackfilms auf Bauteilen mit einer Anordnung auf einer rotierenden spindelförmigen Halterung.
Fig.4: Schematische Darstellung einer nicht erfindungsgemäßen in-situ Prozessmonitoringvorrichtung zur Detektion des Aushärtezustandes eines UV-aushärtbaren Lackfilms auf Bauteilen unter Verwendung eines dichroitischen Spiegels 411.
Fig.5: Schematische Darstellung einer nicht erfindungsgemäßen in-situ Prozessmonitoringvorrichtung zur Detektion des Aushärtezustandes eines UV-aushärtbaren Lackfilms auf Bauteilen, wobei die Aushärtung mittels UV-Belichtung durch Reflektion an einem dichroitischen Spiegel 511 erfolgt und ein Loch im Spiegel 513 einen Bruchteil der von der Bauteiloberfläche zurückgeworfenen IR-Strahlung 527 zum Spektrometer 503 durchlässt.
Fig.6: Schematische Darstellung einer in-situ Prozessmonitoringvorrichtung zur Detektion des Aushärtezustandes eines UV-härtbaren Lackfilms auf Bauteilen, wobei mittels segmentierter Spiegelelemente 631, 632 die UV-Belichtung durch Reflektion optimiert und eine Erhöhung der Signalqualität des Spektrums gewährleistet indem der Anteil des Messsignals 627, der auf das Eingangsfenster des Spektrometers 603 für eine "in-situ" Messung fällt, erhöht wird.
Fig.7: Schematische Darstellung einer in-situ Prozessmonitoringvorrichtung zur Detektion des Aushärtezustandes eines UV-härtbaren Lackfilms auf Bauteilen, in einer weiteren beispielhaften Spiegelanordnung im Vergleich zu Fig. 6.
Fig.8: Schematische Darstellung der erfindungsgemäßen Spiegelanordnung wobei die segmentierten Spiegel in Projektion entlang der ursprünglichen Richtung der Strahlungsquelle durchgehend erscheinen, in Projektion entlang der vom Substrat reflektierten Strahlung jedoch mit Öffnung erscheinen.
Fig.9: Schematische Darstellung einer in-situ Prozessmonitoringvorrichtung welche mehrere segmentierte Spiegel mit unterschiedlicher Verkippung zeigt.

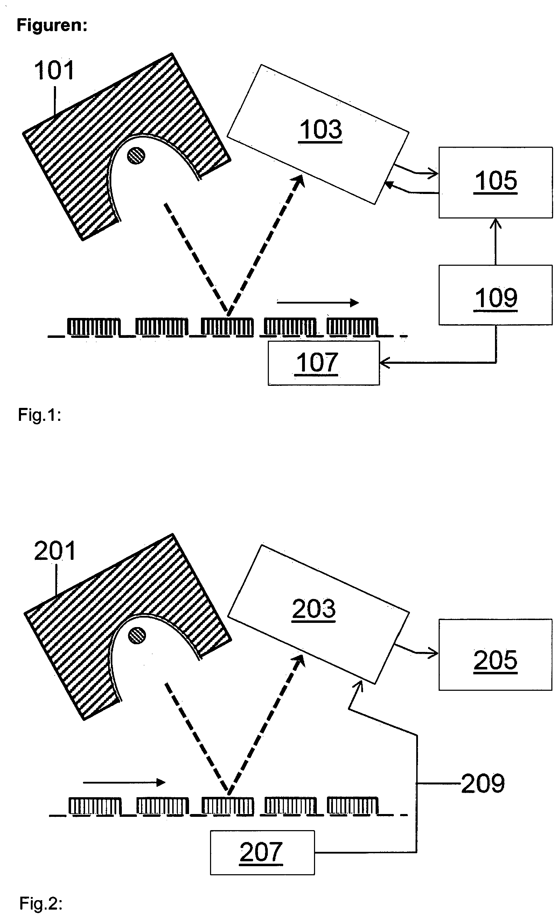

Eine automatisierte Erfassung des Aushärtungsgrads eines UV härtbaren Lackfilms auf Bauteilen ist in Fig. 1 schematisch gezeigt. Die Bauteile werden sequentiell in den Lichtstrahl einer UV Lichtquelle 101 bewegt. Dort verweilen die Bauteile für ein bestimmtes Zeitintervall während dem der Lackfilm mit UV Licht für die Aushärtung beaufschlagt wird. Ein Teil der von der UV Quelle emittierten Strahlung wird an der Oberfläche des Lackfilms reflektiert und kann mit einer geeignet angeordneten Wellenlängen-selektiven Lichtsensoranordung (Spektrometer) 103 detektiert werden. Hoch intensive UV Quellen basieren auf Gasentladungslampen, deren Plasma nicht nur UV Licht emittiert, sondern mindestens ebenso stark sichtbares Licht und Infrarot Strahlung. Aus diesem Grund dient die UV Lichtquelle gleichzeitig als Quelle für das zu analysierende Reflektionslicht, und es muss nicht die in Spektrometern üblicherweise eingebaute Lichtquelle für den Messstrahl verwendet werden.

Während dem Belichtungszeitintervall werden mehrere Spektren (mindestens 2) gemessen und einer Monitoring Einheit 105 zugeführt, die die Spektren automatisch vergleicht und aus diesen Spektraldaten den Aushärtungsgrad mit einem geeigneten Algorithmus aus den spektralen Änderungen berechnet. Mit Erreichen eines bestimmten, vorgegebenen Aushärtungsgrads wird ein Signal zum Antrieb des Vorschubs der Bauteile 107 gesendet, der den Wechsel zum nächsten Bauteil vollzieht.

Mit dieser mit stehenden Bauteilen durchgeführten Aushärtung erfolgt diese gewöhnlich nicht sehr homogen, da die Ausleuchtung der Bauteiloberfläche mit gebräuchlichen, in die Richtung senkrecht zu Bewegungsrichtung der Bauteile ausgedehnten UV Quellen ungleichmässig wird, insbesondere bei Bauteilen mit einer Länge, die signifikant grösser als die Ausdehnung des Ausleuchtungsbereichs oder Länge der UV Quellen ist.

Es ist vorteilhaft, die Bauteile kontinuierlich durch den Ausleuchtungsbereich zu bewegen, da so eine wesentlich bessere Homogenität erhalten werden kann. Werden bei dieser kontinuierlichen Bewegung gleichzeitig Reflektionsspektren mit der Monitoring Einheit 203 aufgenommen, sollte dieser Aufnahmezyklus synchronisiert mit der Bewegung der Bauteile erfolgen. Damit kann gewährt werden, dass für alle nacheinander belichteten Bauteile in gleicher Weise das Reflektionsverhalten gemessen wird. In Fig. 2 ist eine solche Synchronisation mit der Bewegung schematisch gezeigt, indem mit einem Sensor die Position des Bauteils erfasst wird und ein Trigger Signal 209 für die einzelnen Spektralaufnahmen für eine Serie vordefinierten, aufeinanderfolgenden Positionen generiert.

Da die reflektierte Intensität aufgrund der Oberflächengeometrie sich kontinuierlich mit der Bewegung der Bauteile ändern kann, muss die Aufnahmerate dabei schneller sein als die Rate, mit der die Bauteile durch den Ausleuchtungsbereich vor der UV Quelle vorbeibewegt werden. Diese Änderung der erfassten Intensität führt zu einer Modulation der Intensität sowohl während der Aufnahme eines Spektrums als auch von aufeinanderfolgenden Spektren. Für den Vergleich der Spektren zur Detektion des Aushärtungsgrads ist es vorteilhaft, die Spektraldaten nicht direkt als Intensitätsspektrum zu vergleichen, sondern in einer mathematisch umgewandelten Form, bei der die direkte Abhängigkeit von der absoluten Intensität unterdrückt wird. Mögliche Formen liegen in der logarithmierten Intensität Ln[I(λ)] oder in der logarithmischen Ableitung der Intensitätsspektren I(λ) nach den Wellenlängen λ, ∂Ln[I(λ)]/∂λ, wobei Ln die natürliche Logarithmusfunktion bezeichnet. Während das Spektrum Ln[I(λ)] sich bei ändernder Absolut Intensität um einen Betrag verschiebt, hat das Spektrum ∂Ln[I(λ)]/∂λ die Eigenschaft, dass sie bei jeder Wellenlänge unabhängig von der aktuellen Intensität das Signal im Wesentlichen dasselbe ist, da bei der Differenzbildung im Zusammenhang mit der Ableitung ∂Ln[I(λ)]/∂λ sich auch eine Verschiebung des Spektrums Ln[I(λ)] aufhebt. Für den Spektren Vergleich können auch andere Verfahren verwendet werden, z.B. auch numerische Fit Algorithmen, bei denen das gemessene Spektrum mit einem vorgegebenen, nach einem geeigneten Modell berechneten Spektren vergleicht. Diese Fit Algorithmen können einen Wellenlängenabhängigen Skalierungsfaktor als numerischen Optimierungsparameter enthalten, der im Vergleichsalgorithmus der Spektren als zusätzlichen Freiheitsgrad behandelt wird.

Im Falle von UV-VIS-NIR Gitterspektrometern mit Detektor Array Sensor kann mit einer Rate von einigen 10 bis zu 100 Spektren pro Sekunde gemessen werden, d.h. während einer Belichtung von typischerweise 1...100 Sekunden je nach Lack, UV Quelle, geometrische Anordnung werden im jedem Falle eine Vielzahl von Spektren gemessen und so die graduelle Aushärtung aus zeitlichen Veränderungen von Reflektionssignalen in bestimmten Wellenlängenbereichen erfasst werden.

Im Falle eines Fourier-Transform Spektrometers, wie sie im Infrarotbereich eingesetzt werden, können mit schnell scannenden Instrumenten auch Spektren Raten von 1...100 pro Sekunde erreicht werden. Da die typischen spektralen Bereiche, in denen die Änderungen sichtbar sind, nicht sehr schmal sind (typ einige 100 cm⁻¹), kann in einem niedrig auflösenden Mode mit geringerem Interferometer Phasen Scan Bereich (im einfachsten Falle eine lineare Bewegung eines Spiegels des Interferometers) gearbeitet werden, womit die Scangeschwindigkeit erhöht werden kann, da diese durch die Mechanik der Bewegung eines Teils des Interferometers durch die Trägheit dieses beweglichen Elements limitiert ist (im einfachsten Fall eine Linearbewegung eines Spiegels).

Im Falle der Detektion von spektralen Veränderungen mittels diskreten optischen Filtern zusammen mit einfachen Intensitätssensoren müssen mehrere Wellenlängenbereiche gleichzeitig gemessen werden, um spektrale Änderungen in der Reflektion aufgrund von zunehmender Aushärtung zu erfassen. Intensitätssensoren haben gewöhnlich einen wesentlich höhere Signaldynamik Bereich wie Array Sensoren. Damit sind diesen kaum praktische Limiten an Repetitionsraten der Signalerfassung in dieser Anwendung gestellt, bei der die minimale Belichtungszeit für vollständige Aushärtung die relevante Zeitbegrenzung darstellt, die wie oben erwähnt, in realen Anwendungen im Bereich von 1...100sec zu liegen kommt.

Um hohe Produktivität in der Belichtung von Bauteilen zu erreichen, wird vornehmlich mit hoch intensiven UV Quellen mit Intensitätsverteilung über den gesamten UV Bereich mit Wellenlängen λ von 200...400nm gearbeitet. Solche Quellen bestehen gewöhnlich aus Hochleistungs Metall-Halid Lampen, in denen elektrisch ein Plasma angeregt wird, das das UV Licht emittiert, in Kombination mit optischen Spiegelelementen, die das UV Licht möglichst in den Anwendungsbereich vor der Lampe bündeln. Die zu belichtenden Bauteile, deren Oberfläche mit UV Lack versehen sind, werden für die Belichtung in diesen Anwendungsbereich gebracht. Diese UV Quellen können entweder als lineare Quellen mit einer bestimmten, rohrförmigen Lampe und einem entsprechend geformten länglichen Spiegelelement ausgeführt sein, oder sie können auch aus einer Serie nebeneinander sich befindlichen UV Quellen mit je einer punktförmigen Lampe und einem geeigneten Reflektor dazu bestehen. Diese Metall-Halid Lampen emittieren neben dem gewünschten UV Licht (<20%) auch intensive sichtbare (-10%) und Infrarot Strahlung (>70%). Diese intensive Infrarotstrahlung führt zu einer Erwärmung der Bauteile. Im Falle von Kunststoffteilen, deren Kunststoffmaterial eine maximale Temperatur <100°C zulässt, muss die Belichtung so erfolgen, dass die notwendige UV Dosis über die Zeit so aufgebracht wird, dass dabei die Bauteile unterhalb der kritischen Phasenumwandlungs-Temperatur bleiben.

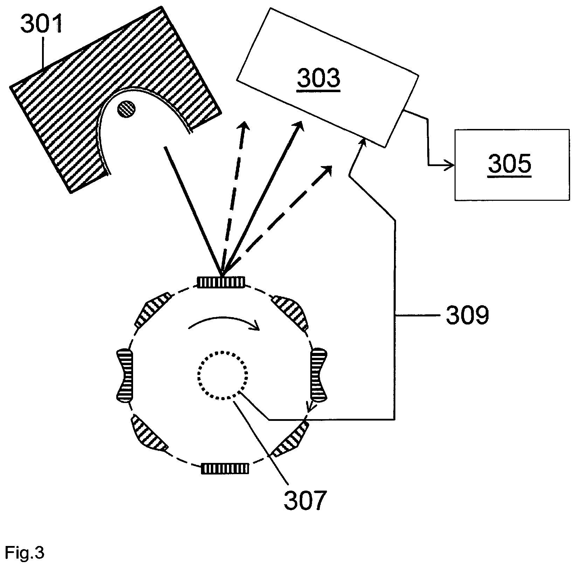

Die Problematik der hohen Erwärmungen während der Belichtung kann folgendermassen umgangen werden. Einerseits werden die Bauteile nicht kontinuierlich der UV Strahlung ausgesetzt, indem sie zyklisch in den Bereich hoher Intensität geführt werden, so dass sie in der Zeitdauer, in der sie sich ausserhalb des Belichtungsbereichs sich befinden, periodisch abkühlen können. Diese zyklische Bewegung der Bauteile wird vornehmlich realisiert, indem die Bauteile auf einer spindelförmigen Halterung angeordnet werden und diese Halterung um die eigene Achse gedreht wird (Fig. 3).

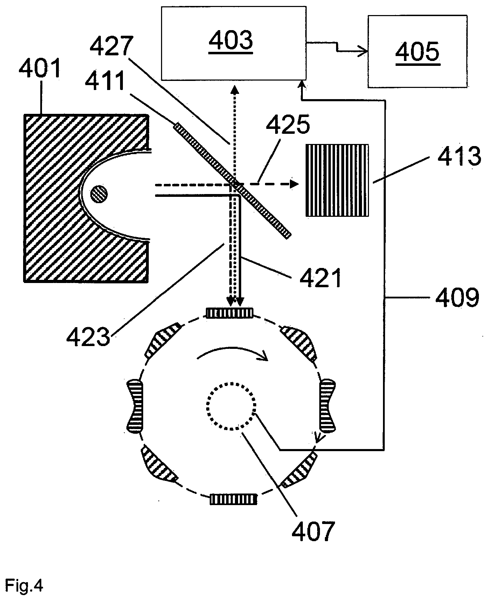

Natürlich ist die Anordnung der Bauteile auf einer Spindel nicht die einzige Art, die Teile zyklisch durch den Anwendungsbereich zu bewegen: mit einer Anordnung der Bauteile auf einem drehenden Teller oder eine aktives lineares zyklisches Vorwärts und Rückwärtsbewegen der Bauteile auf einem linearen Transportsystem kann im Wesentlichen dasselbe erreicht werden. Andererseits kann durch ein geeignet beschichtetes dichroitisch Spiegelelement 411, das zwischen UV Quelle und Anwendungsbereich angeordnet wird, selektiv das UV Licht reflektiert werden und das sichtbare und infrarote Licht 425 durch selektive Transmission im Spiegelelement in hohem Masse vom Anwendungsbereich ferngehalten werden (Fig. 4).

Mit einem solchen dichroitischen Spiegelelement kann die sichtbare und infrarote Strahlung typischerweise zu über 80% unterdrückt werden, wobei gleichzeitig die UV Strahlung 421 effizient in den Anwendungsbereich gelenkt wird. Selbst mit dieser Abschwächung der gelangt immer noch ein beträchtlicher Anteil IR Licht 423 in den Anwendungsbereich. Der Relativanteil am gesamten Licht im Anwendungsbereich beträgt jedoch typischerweise immer noch 30...50%.

Für ein Monitoring der Reflektionsspektren im relevanten Infrarotbereich dient dieses Licht als Quelle zur Ermittlung des Reflektionsgrads der Lackschicht.

Im Gegensatz zu konventioneller Anwendung von IR Spektrometern, die eine interne IR Quelle eingebaut haben, wird diese in der hier dargestellten Monitoring Anwendung nicht verwendet, sondern direkt das von der UV Lampe emittierte IR Licht 427.

Mit der Anordnung der Bauteile auf einer rotierenden Spindel wird aufgrund der gleichzeitigen Bewegung der ganzen Spindel eine schrittweise Bewegung, wie oben beschrieben, für die spektrale Erfassung des reflektierten Lichts mit einem Monitoring System, aufgrund der mechanischen Trägheit, technisch anspruchsvoller. Wesentlich einfacher ist eine kontinuierliche Drehbewegung. Solange die Umfangsgeschwindigkeit der Bauteile auf der Spindel genügend langsam ist, so dass sich die Bauteile nur geringfügig (im Vergleich zur eigenen Grösse) während eines Messzyklus des Spektrometers bewegen, kann davon ausgegangen werden, dass sich das erfasste Spektrum nur geringfügig von einem statisch gemessenen Spektrums unterscheidet. Typische Aufnahmezeiten für ein Spektrum sind sowohl mit Detektorarrays in Gitterspektrometern oder auch schnell scannenden FTIR Spektrometern im Bereich von einigen Millisekunden bis wenige 10 Millisekunden, Umfangsgeschwindigkeiten auf Spindeln bewegen sich typischerweise im Bereich von 100...500 mm/s, d.h. während eines Aufnahme Scans des Spektrometers beträgt die Bewegung typischerweise 1... 10mm, was für typische Bauteilgrössen klein gegenüber der eigenen Grösse ist. Wird für die weitere numerische Auswertung der Daten wie oben beschrieben nicht die reflektierte Intensität I(λ), sondern eine abgeleitete Grösse wie z.B. ∂Ln(I)/∂λ verwendet, die unabhängig von der absoluten Intensität ist, können die während der Aufnahmen des Spektrums durch die gleichzeitige Bewegung der Bauteile auftretenden Intensitätsschwankungen mit den Grössen Ln(I) oder ∂Ln(I)/∂λ unterdrückt werden. Selbstverständlich ist es vorteilhaft für eine hohe spektrale Signalstabilität, eine möglichst hohe Aufnahme Scan Rate zu haben, womit die Intensitätsschwankungen relativ kleiner werden, und entsprechend über mehrere Spektren zu mitteln anstelle der Wahl einer langsameren Rate mit höheren Intensitätsschwankungen, da die Signalverfälschungen so minimiert werden.

Im Falle eines FTIR Spektrometers führt eine sich während des Scans ändernde Reflektionsintensität zu einer Modulation des Interferograms, die sich in der Fourier Transformierten als eine Faltung mit einer kurzwelligen Verbreiterung der Auflösungsfunktion äussert. Da die Modulationsrate in der Grössenordnung der Scanrate liegt, führt diese Faltung zu einer minimalen Peak Verbreiterung im Reflektionsspektrum. Da aber die spektralen Charakteristiken des Lacks nicht sehr schmalbandig sind und damit auch deren Veränderungen durch die Aushärtungsreaktion des Lacks es nicht sind, sind die Verfälschungen durch die während des Scan leicht ändernden Reflektionsintensitäten klein und damit von untergeordneter Relevanz für ein Monitoring des Aushärtegrads des Lacks.

Die vorzugsweise eingesetzte Version von Fig. 4 mit dichroitischem UV Spiegel 411 in Kombination mit drehender Spindel hat aber die Einschränkung, dass das vom Lackfilm auf dem Bauteil reflektierte Licht, das mit dem Spektrometer erfasst werden soll, durch den dichroitischen UV Spiegel transmittiert werden muss. Die dichroitische Beschichtung des Spiegels lässt das UV Licht nicht durch, hingegen ist dieser transparent für das sichtbare und das nahe Infrarotlicht (NIR) bis zu Wellenlängen von ca 2500...3000nm 427. Längerwelliges Infrarotlicht wird durch die verwendeten Glassubstrate des UV Spiegels absorbiert und kann damit ein dahinter befindliches Spektrometer nicht mehr erreichen. Es gibt zwar UV Spiegelsubstratmaterialien mit hoher Infrarottransparenz, diese sind aber sehr kostspielig, insbesondere in Grössen von mehreren 10cm Ausdehnung (z.B. Zink Sulfid).

Mit üblichen Gläsern für den UV Spiegel kann daher ein Monitoring des Aushärtezustands des Lackfilms nur beschränkt auf das NIR Wellenlängenband realisiert werden, die typischen spektralen Änderungen im längerwelligen IR hingegen nicht.

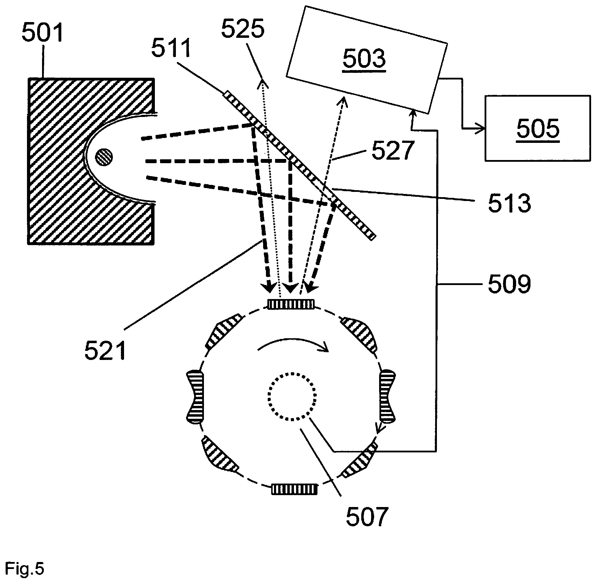

Daher ist es wünschenswert, eine Konfiguration zu haben, bei der immer noch eine hohe Reflektion für das UV Licht der Quelle erreicht werden kann, jedoch reflektiertes Licht ohne Transmission durch ein optisches Element mit einem Spektrometer erfasst werden kann, womit der volle die Luft durchdringende Infrarote Wellenlängenbereich der spektralen Reflektion im Messstrahl vorhanden ist. In Fig. 5 ist eine solche Realisation dargestellt.

Mit Hilfe eines Lochs 513 im UV Spiegel kann IR Licht 527 ungehindert auf das Messfenster des Spektrometers 503 hinter dem UV Spiegel gelangen. Einerseits soll die Grösse des Lochs so gewählt werden, dass der vom Lackfilm auf der Bauteil Oberfläche reflektierte Lichtstrahl während mindestens dem Zeitintervall eines Spektrometer Scans das Messfenster des Spektrometer trifft. Hierzu können also mehrere Löcher, Spalten oder Schlitze im Spiegel Anwendung finden. Andererseits sollte das Loch aber möglichst klein sein, da in diesem Flächenbereich der UV Spiegel wirkungslos ist und somit lokal weniger UV Licht der Quelle 521 auf den Lackfilm der Bauteile fällt.

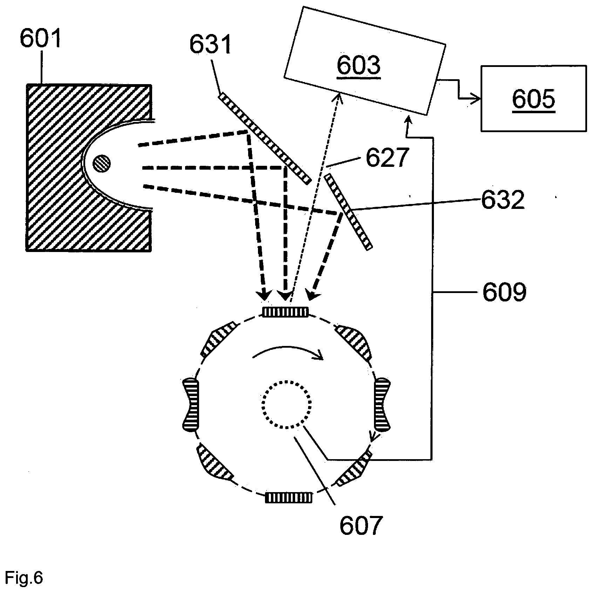

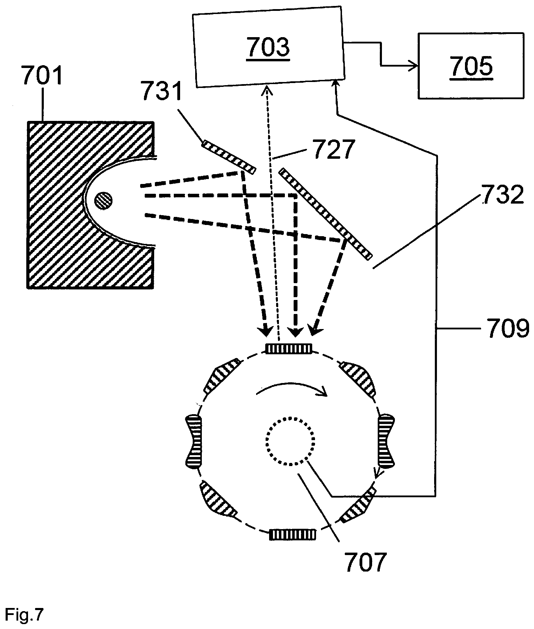

Mit einem UV Spiegel, der anstelle eines Lochs aus mindestens 2 Segmenten besteht, die in einem bestimmten Abstand (Spalt) angeordnet sind, kann die mit dem Loch verbundene Ungleichförmigkeit der Belichtung eliminiert werden (Fig 6). Durch geeignete, unterschiedliche Neigung, Grösse und Anzahl der Spiegelsegmente 631, 632 kann der Verlust an UV Licht durch die Spaltöffnung nicht nur weitgehend eliminiert werden, mit einer optimierten Anordnung kann die UV Intensität auf den Bauteilen sogar über den Wert mit einem flachen, durchgehenden UV Spiegel erhöht werden. Die Öffnung für den Durchtritt des rückreflektierten Lichtstrahls kann so weit gehalten werden, um möglichst viel reflektiertes Infrarotlicht 627 zu erfassen, ohne einen wesentlichen Verlust an UV Licht auf den auszuhärtenden Lackfilmen auf den Bauteiloberflächen. Damit kann mehr IR Licht auf das Eingangsfenster des Spektrometers 603 gebracht werden, was die Signalqualität des Spektrums für ein Monitoring des Aushärtungsprozesses verbessert. Diese Segmentierung des UV Spiegels sollte vorzugsweise nicht in der Mitte des UV Spiegels gemacht sein, da einerseits in diesem Bereich die höchste UV Intensität fällt damit der durch den Spalt verursachte Verlust an UV Licht am grössten wäre, andererseits kann der Öffnungswinkel für das von den Bauteilen reflektierte Licht mit einer nicht-mittigen Segmentierung, wie in Fig. 6 im oberen bzw. in Fig. 7 im unteren Teil des Spiegels dargestellt, gegenüber einer mittigen Segmentierung vergrössert werden. Auf diese Weise kann das Messsignal vergrössert werden, bei gleichzeitig minimalem Verlust an UV Licht.

Eine Anordnung des Spektrometers seitlich, also lateral versetzt in Bezug zu einem durchgehenden Spiegelelement, hätte jedoch eine wesentlich geringere Intensitätsausbeute für die Messung im Vergleich zur Anordnung wie in Figuren 6 und 7 beschrieben.

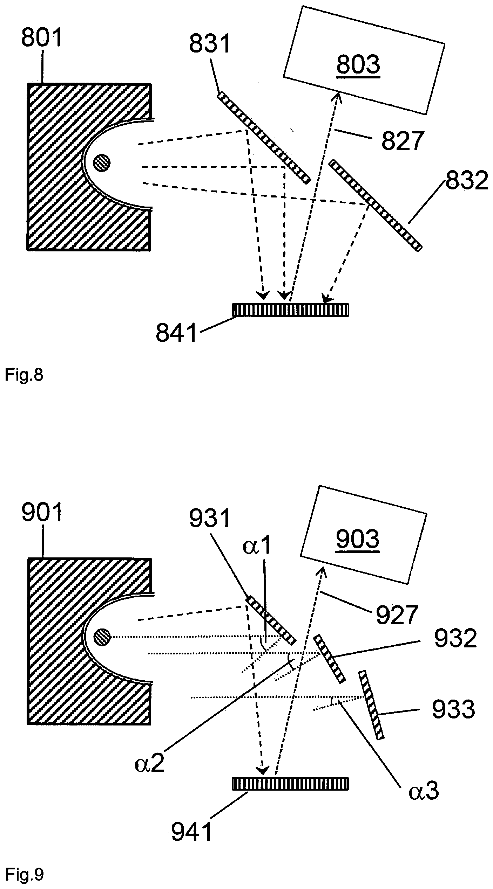

Erfindungsgemäß wird das Aushärtelicht über einen segmentierten Spiegel 831 und 832 auf die Substrate 841 gelenkt, wobei dieser in Projektion entlang der ursprünglichen Richtung der Strahlungsquelle durchgehend erscheint, in Projektion entlang der vom Substrat reflektierten Strahlung jedoch mit Öffnung erscheint, und somit einen Teil der vom Substrat reflektierten Strahlung ungehindert zum Detektor 803 durchlässt, wie in Fig. 8 ersichtlich.

Eine weitere besonders bevorzugte Ausführungsform ist in Fig. 9 dargestellt, worin zumindest ein oder mehrere Spiegel 931, 932, 933 in, zwischen der optischen Hauptachse der Strahlungsquelle und der Normalen der reflektierenden Oberfläche des Spiegels aufgespannten Winkeln α1, α2,... αn, verkippt sein können, wobei der Winkelbereich 0<α1, α2...αn<90° sein soll und die Winkel α1...αn nicht gleich sein müssen.

Mit einem Monitoring des reflektierten Lichts der UV Quelle kann der Aushärtezustands eines Lackfilms auf Bauteilen in-situ, also während des Prozesses, und berührungslos erfasst werden und damit eine online Kontrolle der gewünscht zu erreichenden Lackeigenschaften während des Prozessablaufs erfolgen. Dies hat mehrfache Vorteile in der Anwendung in einem Produktionsprozess für mit UV aushärtbaren Lackfilme auf Bauteilen.

Mit einem solchen Monitoring kann die Produktivität erhöht werden, da nicht mehr für eine fest vorgegebene Zeit belichtet wird, sondern nur noch die für die aktuellen Bauteile effektiv minimal notwendige Zeit zum vollständigen Aushärten des Lackfilms. Damit können potentiell zu kurze Belichtungen und damit Qualitätsprobleme vermieden werden für den Fall, dass aufgrund abweichender Angaben eine zu kurze Belichtungszeit gewählt würde. Weiter kann auch die Gleichförmigkeit der Belichtung erhöht werden, indem der Belichtungsprozess mit Hilfe des Monitorings auf eine bestimmte, vorgegebene und zu erreichende spektrale Änderung im Reflektionsspektrum gesteuert wird. Eine möglichst hohe Gleichartigkeit ist Ziel jedes Massenproduktionsprozesses, um konstant gleichbleibende Eigenschaften und Qualitäten der Bauteile zu gewähren.

Eine weitere Verbesserung der erfindungsgemäßen Prozessmonitoringvorrichtung liegt darin dass immer, also winkelunabhängig, ein Messsignal zum Spektrometer gelangt.

| | |
|---|---|
| UV source (Signalquelle, Strahlungsquelle) | 101, 201, 301, 401, 501, 601, 701, 801, 901 |
| Spectrally resolving optical Sensor Unit | 103, 203, 303, 403, 503, 603, 703, 803, 903 |
| Reflection Monitoring System | 105, 205, 305, 405, 505, 605, 705 |
| Parts Motion Drive | 107, 207 |
| Angle Position Sensor | 307, 407, 507, 607, 707 |
| Process Sequencer | 109 |
| Trigger for Spectral Scan | 209, 309 |
| Trigger for Gating Mode | 409 |
| Trigger Signal | 509, 609, 709 |
| Dichroic mirror(s) | 411, 511, 631, 632, 731, 732, 831, 832, 931, 932, 933 |
| IR dump | 413 |
| UV light | 421 |
| Reflected Visible+IR light | 423 |
| Transmitted light (Visible+NIR light; 400...3000nm) | 425, 525 |
| Measurement Signal (Vis+NIR light; 400...3000nm) | 427 |
| Measurement Signal (UV+Vis+IR light; 250...50000nm) | 527, 627, 727 |
| Coated components with curable coating | 841, 941 |

## Patentansprüche

1. In-situ Prozessmonitoringvorrichtung für die Messung des Aushärtungszustands eines UV aushärtbaren Lacks, der als Beschichtung von Bauteilen vorliegt, umfassend zumindest eine Strahlungsquelle (601) für die Aushärtung des Lacks, zumindest eine Signalquelle (601), zumindest ein Spektrometer (603) für eine berührungslose Messung von von den Bauteilen reflektierter Strahlung der Signalquelle (601), sowie eine Monitoring Einheit (605), die dafür ausgelegt ist, aus den von dem zumindest einen Spektrometer gemessenen Spektren einen Aushärtungsgrad des Lacks zu berechnen, wobei die zumindest eine Signalquelle (601) für die Messung identisch ist mit der zumindest einen Strahlungsquelle (601), **dadurch gekennzeichnet, dass** die Prozessmonitoringvorrichtung zumindest einen dichroitischen Spiegel umfasst, der von der Strahlungsquelle (601) emittierte UV Strahlung reflektiert und sichtbare und infrarote Strahlung in hohem Masse transmittiert, wobei der zumindest eine dichroitische Spiegel segmentierte Spiegel (631, 632) umfasst, die durch Abstände (627) separiert und so angeordnet sind, dass die entstehende Spiegelfläche in Projektion entlang der ursprünglichen Richtung der von der Strahlungsquelle emittierten Strahlung durchgehend erscheint, in der Projektion entlang der vom Bauteil reflektierten Strahlung jedoch mit Öffnungen erscheint und somit die reflektierte Strahlung zumindest zu einem Teil ungehindert zum Spektrometer durchlässt.

2. In-situ Prozessmonitoringvorrichtung nach Anspruch 1, wobei die segmentierten Spiegel (931, 932, 933) in zwischen der optischen Hauptachse der Strahlungsquelle (901) und der Normalen der reflektierenden Oberfläche der Spiegelsegmente aufgespannten Winkeln α1, α2,... αn, verkippt sind, wobei der Winkelbereich 0<α1, α2...αn<90° ist, wobei die Winkel α1...αn nicht gleich sein müssen.

3. In-situ Prozessmonitoringvorrichtung einem der vorhergehenden Ansprüche welche eine oder mehrere Lampen als Strahlungsquelle umfasst, welche sowohl Strahlung im für den Aushärtevorgang, als auch Strahlung im für die Messung des Aushärtevorgangs erforderlichen Wellenlängenbereich emittiert.

4. In-situ Prozessmonitoringvorrichtung nach einem der vorhergehenden Ansprüche welche als Strahlungsquelle eine Metall-Halid-Lampe umfasst.

5. In-situ Prozessmonitoringvorrichtung nach einem der vorhergehenden Ansprüche, welche als Strahlungsquelle eine Halogen-Lampe umfasst.

6. In-situ Prozessmonitoringvorrichtung nach einem der vorhergehenden Ansprüche, welche eine Triggereinheit (709) zur Auslösung des Messvorganges und einen Positionssensor (707) für die Positionsmessung der Bauteile umfasst.

7. In-situ Prozessmonitoringverfahren für einen Lackaushärteprozess an mit UV aushärtbarem Lack beschichteten Bauteilen, welches eine Prozessmonitoringvorrichtung gemäß einem der vorhergehenden Ansprüche verwendet.

## Claims

1. An in-situ process monitoring device for measuring the curing status of a UV-curable lacquer which is present as a coating of components, comprising at least one radiation source (601) for curing the lacquer, at least one signal source (601), at least one spectrometer (603) for non-contact measurement of radiation of the signal source (601) reflected from the components, and a monitoring unit (605) which is designed to calculate a degree of curing of the lacquer from the spectra measured by the at least one spectrometer,
the at least one signal source (601) for the measurement being identical to the at least one radiation source (601), **characterized in that** the process monitoring device comprises at least one dichroic mirror which reflects UV radiation emitted from the radiation source (601), and transmits visible and infrared radiation to a high degree, the at least one dichroic mirror comprising segmented mirrors (631, 632) separated by spacings (627) and arranged such that the resulting mirror surface appears as being continuous in projection along the original direction of the radiation emitted from the radiation source, but appears as having apertures in the projection along the radiation reflected from the component, thus enabling unhinderned transmission of at least part of the reflected radiation to the spectrometer.

2. The in-situ process monitoring device according to claim 1, wherein the segmented mirrors (931, 932, 933) are positioned at angles spanned between the major optical axis of the radiation source (901) and the normal of the reflecting surface of the mirror segments α1, α2,... αn, the angle range being 0< α1, α2... αn <90°, the angles α1... αn are not required to be the same.

3. The in-situ process monitoring device according to one of the preceding claims comprising one or more lamps as a radiation source emitting radiation both in the wavelength range required for the curing process and in the wavelength range required for measuring the curing process.

4. The in-situ process monitoring device according to one of the preceding claims comprising a metal halide lamp as a radiation source.

5. The in-situ process monitoring device according to one of the preceding claims comprising a halogen lamp as a radiation source.

6. The in-situ process monitoring device according to one of the preceding claims, comprising a trigger unit (709) for triggering the measuring process, and a position sensor (707) for measuring the position of the components.

7. A method for in-situ process monitoring of a lacquer curing process on components coated with UV curable lacquer using a process monitoring device according to one of the preceding claims.

## Revendications

1. Dispositif de surveillance de processus in situ pour mesurer l'état de durcissement d'un vernis durcissable aux UV qui est présent sous la forme d'un revêtement de composants, comprenant au moins une source de rayonnement (601) pour durcir le vernis, au moins une source de signal (601), au moins un spectromètre (603) pour mesurer sans contact le rayonnement réfléchi par les composants, et une unité de surveillance (605) qui est conçue pour calculer un degré de durcissement du vernis à partir des spectres mesurés par ledit au moins un spectromètre,
ladite au moins une source de signal (601) pour la mesure étant identique à ladite au moins une source de rayonnement (601), **caractérisé en ce que** le dispositif de surveillance de processus comprend au moins un miroir dichroïque qui réfléchit le rayonnement UV émis par la source de rayonnement (601) et transmet un rayonnement visible et infrarouge à un degré élevé, ledit au moins un miroir dichroïque comprenant des miroirs segmentés (631, 632) séparés par des espacements (627) et disposés de telle sorte que la surface miroir résultante apparaisse comme étant continue en projection le long de la direction originale du rayonnement émis par la source de rayonnement, mais apparaisse comme ayant des ouvertures dans la projection le long du rayonnement réfléchi par le composant, ainsi transmettant au moins partiellement le rayonnement réfléchi au spectromètre sans encombre.

2. Dispositif de surveillance de processus in situ selon la revendication 1, dans lequel les miroirs segmentés (931, 932, 933) sont positionnés à des angles compris entre l'axe optique principal de la source de rayonnement (901) et la normale de la surface réfléchissante des segments du miroir α1, α2,.... αn, la plage d'angle étant 0< α1, α2... αn <90°, les angles α1... αn ne doivent pas nécessairement être les mêmes.

3. Dispositif de surveillance de processus in situ selon l'une des revendications précédentes comprenant une ou plusieurs lampes en tant que source de rayonnement émettant un rayonnement à la fois dans la plage de longueurs d'onde requise pour le processus de durcissement et dans la plage de longueurs d'onde requise pour mesurer le processus de durcissement.

4. Dispositif de surveillance de processus in situ selon l'une des revendications précédentes comprenant une lampe aux halogénures métalliques comme source de rayonnement.

5. Dispositif de surveillance de processus in situ selon l'une des revendications précédentes comprenant une lampe halogène comme source de rayonnement.

6. Dispositif de surveillance de processus in situ selon l'une des revendications précédentes, comprenant une unité de déclenchement (709) pour déclencher le processus de mesure, et un capteur de position (707) pour mesurer la position des composants.

7. Procédé de surveillance in situ d'un procédé de durcissement d'un vernis sur des composants revêtus d'un vernis durcissable par UV en utilisant un dispositif de surveillance du procédé selon l'une des revendications précédentes.
